# EUROPÄISCHE PATENTSCHRIFT

(11) **EP 4 107 458 B1**
(45) Veröffentlichungstag und Bekanntmachung des Hinweises auf die Patenterteilung: **25.10.2023**
(21) Anmeldenummer: 20760859.7
(22) Anmeldetag: 21.08.2020
(51) Int. Cl.: F27B 1/20, C04B 20/06, F27B 15/08, F27D 3/00

(54) **VORRICHTUNG ZUR HERSTELLUNG EINES GEBLÄHTEN GRANULATS**
DEVICE FOR PRODUCING EXPANDED GRANULATED MATERIAL
DISPOSITIF DE PRODUCTION DE MATÉRIAU GRANULÉ EXPANSÉ

(43) Veröffentlichungstag der Anmeldung: 28.12.2022
(73) Patentinhaber: Omya International AG, 4665 Oftringen (CH)
(72) Erfinder: KREMER, Hartmut, 9241 Wernberg (AT); NEUBACHER, Julian, 8010 Graz (AT); TSCHERNKO, Harald, 8200 Gleisdorf (AT)
(74) Vertreter: KLIMENT & HENHAPEL
(86) Internationale Anmeldenummer: PCT/EP2020/073567
(87) Internationale Veröffentlichungsnummer: WO 2022/037796

(56) Entgegenhaltungen:
- EP-A1- 0 007 977
- EP-A1- 2 708 517
- WO-A1-2012/060157
- WO-A1-2013/053635
- WO-A1-2019/210338

## Beschreibung

### GEBIET DER ERFINDUNG

Die vorliegende Erfindung bezieht sich auf eine Vorrichtung zur Herstellung eines geblähten Granulats aus sandkornförmigem, mineralischem Material mit einem Treibmittel, beispielsweise zur Herstellung eines geblähten Granulats aus Perlit- oder Obsidiansand mit gebundenem Wasser als Treibmittel, die Vorrichtung umfassend einen Ofen mit einem im Wesentlichen senkrecht stehenden Ofenschacht, der ein oberes Ende und ein unteres Ende aufweist, wobei zwischen den beiden Enden eine Förderstrecke verläuft, welche durch mehrere, in einer Förderrichtung voneinander getrennt angeordnete Heizzonen führt, wobei die Heizzonen jeweils zumindest ein voneinander unabhängig steuerbares Heizelement aufweisen, um das Material insbesondere auf eine kritische Temperatur zu erhitzen und die Sandkörner zu blähen, wobei weiters mindestens ein Zuführmittel vorgesehen ist, das dazu eingerichtet ist, zumindest das ungeblähte Material an einem der beiden Enden des Ofenschachts in Richtung des anderen der beiden Enden des Ofenschachts in den Ofenschacht aufzugeben, um das Material in Förderrichtung gesehen in der letzten Hälfte, vorzugsweise im letzten Drittel, der Förderstrecke zu blähen, wobei zumindest ein Leitelement vorgesehen ist, das zumindest abschnittsweise im Ofenschacht angeordnet ist, wobei das Leitelement zumindest im Bereich des einen der beiden Enden des Ofenschachts mit einer Innenwand des Ofenschachts einen Spalt ausbildet, wobei das mindestens eine Zuführmittel zur Aufgabe des ungeblähten Materials in den Spalt eingerichtet ist.

### STAND DER TECHNIK

Aus der WO 2013/053635 A1 sind ein Verfahren und eine Vorrichtung zum, insbesondere geschlossenzelligen, Blähen von sandkornförmigem, mineralischem Material, welches ein Treibmittel - wie z.B. gebundenes Wasser - enthält, bekannt. Dabei wird das Material in einen Ofen mit einem im Wesentlichen senkrecht stehenden Ofenschacht von oben aufgegeben. Mittels der Schwerkraft wird das Material durch den Ofenschacht von dessen oberem Ende zu dessen unterem Ende entlang einer Förderstrecke in einer Förderrichtung gefördert. Die Förderstrecke führt dabei durch mehrere, in Förderrichtung voneinander getrennt angeordnete Heizzonen mit unabhängig voneinander steuerbaren Heizelementen, um das Material auf eine kritische Temperatur zu erhitzen und die Sandkörner zu blähen. Das geblähte Granulat wird am unteren Ende ausgetragen. Aufgrund von im Ofenschacht auftretenden Auftriebskräften, die u.a. durch die Kaminwirkung des Ofenschachts ausgelöst werden und sich durch die unterschiedliche Dichte vor und nach der Expansion verschieden stark auswirken, eignet sich diese Art zu blähen für Rohsande mit Körnungen von typischerweise größer gleich 75 µm, insbesondere größer gleich 100 pm. Bei feineren Körnungen werden die Auftriebskräfte zu groß für ein zuverlässiges Blähergebnis. Darüberhinaus kommt es bei feinen Körnungen zur erhöhten Gefahr einer Agglomeration an der Innenwand des Ofenschachts, weil zu leichte Partikel bzw. Partikel mit zu geringer Dichte zu lange in der Heizzone schweben. Die Partikel nehmen in diesem Fall nach der Expansion weiter Energie auf und erweichen nochmals, ohne dass es durch isenthalpe Formänderung zu einer Abkühlung kommen kann, was wiederum die Gefahr der Agglomeration an der Innenwand des Ofenschachts deutlich erhöht. Diese Gefahr nimmt mit enger werdendem Kornband zu, da - bildlich gesprochen - nicht mehr genug gröbere und damit gleichzeitig schwerere Partikel vorhanden sind, die die feineren Partikel gegen die Auftriebskräfte mitziehen.

Um Rohsande mit feineren Körnungen zu blähen, ist es aus der WO 2016/191788 A1 sowie aus der WO 2018/191763 A1 bekannt, das Material gemeinsam mit einer Luftmenge von unten nach oben in den Ofenschacht aufzugeben bzw. einzublasen und durch den Ofenschacht zu befördern. Es zeigt sich, dass bei Aufgabe sehr feiner Körnungen in Kombination mit dem Einblasen unterschiedliche Strömungen synchronisiert werden müssen, um anschließend ein gleichförmiges Strömungsprofil durch den Ofenschacht zu erhalten und Turbulenzen zu vermeiden, da diese Agglomerationen an der Schachtwand begünstigen. Solche Agglomerationen wiederum bewirken ein sukzessives "Zuwachsen" des Schachts und damit einhergehend eine Behinderung der Wärmestrahlung, was wiederum zu einem schlechteren Expansionsergebnis führt.

Aus der WO 2021/060157 A1 ist ein senkrecht stehender Brennofen zum Brennen von Kalk, insbesondere aus Kalkstein und Dolomit, bekannt. Der Brennofen weist eine äußere Röhre und eine innere Röhre auf, zwischen denen sich das zu brennende Material (schwerkraftbedingt) entlang bewegt, wobei das Material zwischen die äußere Röhre und die innere Röhre eingebracht wird. D.h. die Röhren bilden eine Art Spalt zwischen sich aus, in welchen das Material aufgegeben wird, wobei das Material mittels einer Aufgabevorrichtung von oben in den Brennofen eingebracht wird.

Aus der EP 0007977 A1 sind ein Verfahren sowie ein Ringschachtofen zum Brennen von stückigem Brenngut wie Kalkstein, Dolomit, Magnesit oder dergleichen bekannt, wobei der Ringschacht und der Innenschacht abwechselnd mit Frischluft und Brenngasen beaufschlagt bzw. mit der Abgasabführung verbunden werden. Der Ringspalt sowie der Innenschacht werden durch einen Schachteinsatz im Ofenschacht ausgebildet.

### AUFGABE DER ERFINDUNG

Es ist daher Aufgabe der vorliegenden Erfindung, eine Vorrichtung zur Herstellung eines geblähten Granulats zur Verfügung zu stellen, die die oben genannten Nachteile überwindet. Insbesondere soll die Vorrichtung das Blähen von Rohsanden mit feinen Körnungen, bevorzugt mit Körnungen kleiner gleich 120 µm, besonders bevorzugt mit Körnungen im Bereich von 50 µm bis 100 µm, und engem Kornband ermöglichen, wobei vorzugsweise ein möglichst gleichförmiges Expansionsprodukt erzielbar ist.

### DARSTELLUNG DER ERFINDUNG

Zur Lösung der genannten Aufgabe ist es bei einer Vorrichtung zur Herstellung eines geblähten Granulats aus sandkornförmigem, mineralischem Material mit einem Treibmittel, beispielsweise zur Herstellung eines geblähten Granulats aus Perlit- oder Obsidiansand mit gebundenem Wasser als Treibmittel, die Vorrichtung umfassend einen Ofen mit einem im Wesentlichen senkrecht stehenden Ofenschacht, der ein oberes Ende und ein unteres Ende aufweist, wobei zwischen den beiden Enden eine Förderstrecke verläuft, welche durch mehrere, in einer Förderrichtung voneinander getrennt angeordnete Heizzonen führt, wobei die Heizzonen jeweils zumindest ein voneinander unabhängig steuerbares Heizelement aufweisen, um das Material zumindest auf eine kritische Temperatur zu erhitzen und die Sandkörner zu blähen, wobei weiters mindestens ein Zuführmittel vorgesehen ist, das dazu eingerichtet ist, zumindest das ungeblähte Material an einem der beiden Enden des Ofenschachts in Richtung des anderen der beiden Enden des Ofenschachts in den Ofenschacht aufzugeben, um das Material in Förderrichtung gesehen in der letzten Hälfte, vorzugsweise im letzten Drittel, der Förderstrecke zu blähen, wobei zumindest ein Leitelement vorgesehen ist, das zumindest abschnittsweise im Ofenschacht angeordnet ist, wobei das Leitelement zumindest im Bereich des einen der beiden Enden des Ofenschachts mit einer Innenwand des Ofenschachts einen Spalt ausbildet, wobei das mindestens eine Zuführmittel zur Aufgabe des ungeblähten Materials in den Spalt eingerichtet ist, erfindungsgemäß vorgesehen, dass für das mindestens eine Leitelement lösbare Befestigungsmittel vorgesehen sind, um das mindestens eine Leitelement bedarfsweise aus dem Ofenschacht herausnehmen und wieder einsetzen zu können.

Die Förderrichtung ist parallel zur Vertikalen bzw. zur Lotrichtung und kann von oben nach unten oder, umgekehrt, von unten nach oben weisen. D.h. das mindestens eine Leitelement kann sowohl bei der Aufgabe des Materials von oben als auch bei der Aufgabe des Materials von unten vorgesehen sein. Bei der Aufgabe von oben wird das zu blähende Material zumindest teilweise mittels der Schwerkraft entlang der Förderstrecke gefördert. Bei der Aufgabe von unten wird das zu blähende Material typischerweise gemeinsam mit einer Luftmenge in den Ofenschacht aufgegeben und durch den Ofenschacht befördert.

Die Heizelemente können zur Definition der Heizzonen herangezogen werden, da unterschiedliche Heizzonen jeweils zumindest ein Heizelement aufweisen müssen, wobei diese Heizelemente unabhängig voneinander steuerbar sein müssen.

Der Vollständigkeit halber wird festgehalten, dass in Förderrichtung gesehen die letzte Hälfte die zweite Hälfte ist bzw. das letzte Drittel das dritte Drittel.

Grundsätzlich kann ein einzelnes Leitelement vorgesehen sein. Dieses kann aus mehreren Teilen aufgebaut sein, wobei auch mehrere kleinere Leitelemente gemeinsam ein größeres Leitelement ausbilden bzw. in diesem integriert sein können. Es können aber auch mehrere separate Leitelemente vorgesehen sein.

Das mindestens eine Leitelement ist aus einem oder mehreren Materialien gefertigt, die die im Ofenschacht auftretenden Temperaturen aushalten. Besagte Materialien können z.B. Metalle, insbesondere Edelstähle oder Nickelbasislegierungen, oder Kohlefaser oder Keramik, insbesondere Hochleistungskeramik, umfassen.

Es sei bemerkt, dass das Leitelement nicht vollständig im Ofenschacht angeordnet sein muss, sondern abschnittsweise auch aus dem Ofenschacht herausragen kann, ohne dass dies die - weiter unten näher geschilderte - Funktion des Leitelements beeinträchtigt. Beispielsweise kann vorgesehen sein, dass ein Teil des Leitelements am oberen und/oder unteren Enden des Ofenschachts aus letzterem zu Befestigungszwecken herausragt.

Es kann aber natürlich auch vorgesehen sein, dass das mindestens eine Leitelement vollständig im Ofenschacht angeordnet - und nur innerhalb von diesem befestigt - ist.

Die Innenwand begrenzt den Ofenschacht. Das Leitelement ist von der Innenwand des Ofenschachts beabstandet, sodass der Spalt zumindest im Bereich von dem einen der beiden Enden des Ofenschachts, d.h. im Bereich des für die Aufgabe des zu blähenden Materials vorgesehenen Endes des Ofenschachts, ausgebildet wird, wobei der Spalt vorzugsweise ein Ringspalt ist. "Ringspalt" ist hierbei insbesondere als umlaufend zu verstehen, ohne dass dies eine Einschränkung auf eine Kreisform beinhaltet.

Indem nun der Spalt - durch die zumindest abschnittsweise Anordnung des Leitelements im Ofenschacht - ausgebildet ist und das ungeblähte Material über den Spalt aufgegeben wird, wird somit das Material bzw. Aufgabegut zumindest im Bereich des Anfangs der Förderstrecke von der radialen Mitte des Ofenschachts ferngehalten. Hier und im Folgenden ist "radial" unabhängig von der konkreten Querschnittsgestalt des Ofenschachts zu verstehen. D.h. egal ob der normal auf die Förderstrecke bzw. Förderrichtung stehende Querschnitt des Ofenschachts kreisförmig ist oder nicht - z.B. wenn der Querschnitt elliptisch, rechteckig oder quadratisch ist -, ist dessen Zentrum als radiales Zentrum bzw. radiale Mitte bezeichnet. Eine radiale Richtung weist entsprechend von der radialen Mitte nach außen.

Insbesondere wenn die Aufgabe von oben erfolgt, tritt im Bereich der radialen Mitte des Ofenschachts typischerweise eine durch den Kamineffekt hervorgerufene, nach oben gerichtete Strömung erhitzter Luft/Gase ("Kaminströmung") auf, die die Förderung des Materials mittels der Schwerkraft behindert. Besagte Luft- bzw. Kaminströmung kann das Material im Spalt jedoch nicht treffen und beeinflussen.

Zudem wird - da es sich um einen Spalt und nicht bloß um eine (insbesondere ringförmige) Öffnung handelt - das Material in den Ofenschacht hinein und in diesem geleitet.

Besagte Leitung kann sich über die gesamte Förderstrecke erstrecken, insbesondere wenn sich das Leitelement über die gesamte Förderstrecke erstreckt. Typischerweise kann die Länge der Förderstrecke dabei in einem Bereich von 3 m bis 20 m, bevorzugt von 5 m bis 15 m, besonders bevorzugt von 6 m bis 10 m, liegen.

Wenn sich das Leitelement - und damit auch der Spalt - nur über einen Teil der Förderstrecke erstreckt, beispielsweise nur über einige Meter, wird das Material einerseits im Spalt über besagten Teil der Förderstrecke geleitet. Andererseits ist in diesem Fall auch noch zumindest ein Stück weit nach dem Ende des Leitelements ein gewisser Leiteffekt typischerweise bemerkbar aufgrund der zwangsweise auftretenden Vergleichmäßigung der Bewegung, insbesondere der Bewegungsrichtung, der einzelnen Materialkörner im Spalt. Entsprechend kann im Falle der Aufgabe von oben bewirkt werden, dass das Material auch noch ein Stück weit nach Austritt aus dem Spalt nicht in Kontakt mit der oben beschriebenen Luftströmung in der radialen Mitte kommt.

Doch auch bei Aufgabe von unten können mittels des mindestens einen Leitelements die Strömungsverhältnisse und damit die Verweilzeit der Partikel sowie auch die Wärmeübertragung auf die Partikel im Ofenschacht gezielt beeinflusst werden.

Sich im Bereich des Spalts ausbildende Strömungen, insbesondere Ringspaltströmungen, begünstigen durch den relativ engen Spalt und die daraus resultierenden erhöhten Strömungsgeschwindigkeiten (turbulente Strömung für Reynolds-Zahl Re>10^4) die Wärmeübertragung auf das Transportgas und somit auch auf die Partikel. Aufgrund der Durchmischung in turbulenten Strömungen ist der Wärmeübergang größer als bei der laminaren Strömung (Wärmeübergangskoeffizient α wird größer).

D.h. das Leitelement begünstigt die Expansion sehr feiner und enger Aufgabefraktionen des Materials, welches insbesondere Durchmesser kleiner gleich 120 µm, bevorzugt kleiner gleich 100 µm, aufweisen kann.

Ein weiterer Effekt des Leitelements ist, dass das gesamte Material bzw. Aufgabegut zumindest am Beginn der Förderstrecke sich sehr nah entlang der Innenwand und damit relativ nahe zu den Heizelementen bewegt. Dies bewirkt eine zeitlich und örtlich gleichmäßige Erwärmung aller Körner des Materials, was wiederum ein gleichmäßiges Blähergebnis nach sich zieht. Dies gilt sowohl bei Aufgabe von oben als auch bei Aufgabe von unten.

Weiters bewirkt das Leitelement, dass das Aufgabegut sowohl von der aktiv beheizten äußeren Seite des Ofens bzw. Ofenschachts bestrahlt wird als auch vom Leitelement selbst, weil das Leitelement einen Teil der Strahlungsenergie reflektiert bzw. absorbiert und anschließend wieder emittiert. D.h. das Leitelement kann als passive Heizquelle fungieren. Der Grad der Reflexion bzw. Emission kann dabei von der Auslegung des Leitelements, insbesondere vom Leitelementmaterial, abhängen, sodass das Leitelement eine, bis zu einem gewissen Grad einstellbare, passive Heizquelle ausbildet.

Das Leitelement hat also multiple positive Wirkungen auf das Expansionsergebnis, die sich gegenseitig verstärken können.

Es zeigt sich, dass unterschiedliche Aufgabefraktionen des zu blähenden Materials jeweils eine andere optimale Leitelementlänge erfordern können, die typischerweise zwischen einem und mehreren Metern betragen kann. Entsprechend ist es bei einer bevorzugten Ausführungsform der erfindungsgemäßen Vorrichtung vorgesehen, dass sich das mindestens eine Leitelement in Förderrichtung gesehen höchstens bis zum Ende der ersten Hälfte, bevorzugt höchstens bis zum Ende des ersten Drittels, besonders bevorzugt höchstens bis zum Ende des ersten Viertels, der Förderstrecke erstreckt. Gemäß dem oben Gesagten kann das Leitelement dabei vom einen der beiden Enden des Ofenschachts bzw. im Bereich des einen der beiden Enden des Ofenschachts beginnen oder von außerhalb des einen der beiden Enden des Ofenschachts.

Die genannte Beschränkung der maximalen Erstreckung des Leitelements in Förderrichtung gesehen kann insbesondere bei Ausführungsformen mit von oben erfolgender Aufgabe des zu blähenden Materials vorgesehen sein.

Alternativ oder zusätzlich kann eine Mindestlänge des Leitelements vorgesehen sein, um je nach Aufgabefraktion ein optimales Blähergebnis zu erzielen. Besagte Mindestlänge kann insbesondere bei Ausführungsformen mit von unten erfolgender Aufgabe des zu blähenden Materials vorgesehen sein.

Entsprechend ist es bei einer bevorzugten Ausführungsform der erfindungsgemäßen Vorrichtung vorgesehen, dass sich das mindestens eine Leitelement über mindestens ein Viertel der Förderstrecke, bevorzugt über mindestens ein Drittel der Förderstrecke, besonders bevorzugt über die gesamte Förderstrecke, erstreckt.

Bei einer bevorzugten Ausführungsform der erfindungsgemäßen Vorrichtung ist vorgesehen, dass sich der Spalt entlang der Förderrichtung gesehen zumindest abschnittsweise um ein radiales Zentrum des Ofenschachts vollumfänglich erstreckt. Entsprechend kann das zu blähende Material problemlos und bei Bedarf auch in sehr großer Menge gleichzeitig von allen Seiten, insbesondere gleichmäßig verteilt über den gesamten Querschnitt des Spalts bzw. Ringspalts, in den Ofenschacht eingebracht werden, was sehr hohe Bläh- bzw. Produktionsraten erlaubt.

Wenn die Befestigung des Leitelements ausschließlich außerhalb des Ofenschachts erfolgt, kann der Spalt auch über die gesamte Erstreckung des Leitelements in Förderrichtung vollumfänglich bezogen auf das radiale Zentrum des Ofenschachts ausgeführt sein, was eine maximale Raumausnutzung im Ofenschacht erlaubt. Wenn hingegen Befestigungselemente für das Leitelement im Ofenschacht notwendig sein sollten, kann der Spalt entlang der Förderrichtung gesehen immer noch abschnittsweise - nämlich in jenem Abschnitt bzw. in jenen Abschnitten, wo keine Befestigungselemente vorhanden sind - vollumfänglich rund um das radiale Zentrum des Ofenschachts ausgeführt sein.

Vorzugsweise ist das Leitelement dort, wo sich der Spalt rund um das radiale Zentrum des Ofenschachts vollumfänglich, also um einen Winkelbereich von 360°, erstreckt, radial, also in radialer Richtung, dicht, insbesondere gasdicht, ausgebildet. Gemäß dem oben Gesagten gilt dies unabhängig davon, ob der Querschnitt des Ofenschachts kreisförmig ist oder nicht. Entsprechend muss der Spaltverlauf nicht kreisförmig sein, sondern kann z.B. auch elliptisch, rechteckig oder quadratisch sein.

Es sei an dieser Stelle bemerkt, dass im Allgemeinen das radiale Zentrum des Ofenschachts und ein radiales Zentrum des Leitblechs zusammenfallen können. Dabei kann ein radiales Zentrum des Leitblechs angenommen werden, selbst wenn das Leitblech dieses radiale Zentrum nicht vollständig umfänglich umgibt - ggf. kann nämlich das Leitblech gedanklich so fortgesetzt werden, dass es das radiale Zentrum über die gesamten 360° umgibt.

Bei einer bevorzugten Ausführungsform der erfindungsgemäßen Vorrichtung ist vorgesehen, dass der Spalt eine Spaltbreite aufweist, die in Förderrichtung um mindestens 50%, bevorzugt um mindestens 65%, besonders bevorzugt um mindestens 80%, variiert, wobei die Spaltbreite vorzugsweise höchstens 10 cm beträgt. Die Spaltbreite entspricht einem Abstand zwischen der Innenwand des Ofenschachts und dem Leitelement bzw. einer der Innenwand zugewandten Oberfläche des Leitelements.

Vorzugsweise kann die Spaltbreite in radialer Richtung gemessen werden oder in einer Richtung normal auf das Leitelement und/oder auf die Innenwand. Insbesondere kann die Spaltbreite für einen Punkt auf der der Innenwand zugewandten Oberfläche des Leitblechs als kürzeste Strecke zwischen diesem Punkt und der Innenwand des Ofenschachts bestimmt werden.

Durch die Variation der Spaltbreite in Förderrichtung - d.h. über die Erstreckung des Leitelements in Förderrichtung im Bereich, wo der Spalt ausgebildet ist - kann die Verweilzeit der Sandkörner entlang der Förderstrecke gezielt beeinflusst bzw. eingestellt werden. Insbesondere kann durch eine Spaltbreitenvergrößerung in einem gewissen Bereich der Förderstrecke eine längere Verweilzeit eingestellt werden als in Bereichen mit geringerer Spaltbreite und vice versa.

Es sind aber natürlich grundsätzlich auch Ausführungsformen denkbar, bei denen die Spaltbreite in Förderrichtung kaum variiert bzw. im Wesentlichen konstant ist.

Jedenfalls kann die Form des Leitelements an die Form des Querschnitts des Ofenschachts entsprechend angepasst sein.

Der angegebene Variationsbereich kann dabei typischerweise auf einen Mittelwert der Spaltbreite in Förderrichtung bezogen sein oder auf eine minimale oder auf eine maximale Spaltbreite, letzteres insbesondere im Falle der erwähnten möglichen maximalen Spaltbreite.

Grundsätzlich ist gemäß dem oben Gesagten eine relative Dimensionierung des Spalts sinnvoll, also ohne Festlegung auf genaue Zentimeterangaben. In manchen Fällen kann jedoch eine sich an Absolutwerten orientierende Dimensionierung sinnvoll sein. Die oben erwähnte, mögliche Auslegung mit einer maximalen Spaltbreite von 10 cm kann für gewisse Aufgabefraktionen besonders gute bzw. gleichmäßige Blähresultate liefern, insbesondere bei Ausführungsformen mit von oben erfolgender Aufgabe des zu blähenden Materials.

Analog ist bei einer bevorzugten Ausführungsform der erfindungsgemäßen Vorrichtung vorgesehen, dass der Spalt eine Spaltbreite aufweist, die in einer umfänglichen Richtung rund um ein radiales Zentrum des Ofenschachts um höchstens 35%, bevorzugt um höchstens 10%, besonders bevorzugt um höchstens 5%, variiert, wobei die Spaltbreite vorzugsweise höchstens 10 cm beträgt.

Der angegebene Variationsbereich kann dabei typischerweise auf einen Mittelwert der Spaltbreite in umfänglicher Richtung bezogen sein oder auf eine minimale oder auf eine maximale Spaltbreite, letzteres insbesondere im Falle der erwähnten möglichen maximalen Spaltbreite.

Die geringe Variation der Spaltbreite in umfänglicher Richtung erweist sich als vorteilhaft für eine gutes und gleichmäßiges Expansionsergebnis, wobei Verwirbelungen und damit ein Anbacken der Sandkörner besonders gut vermieden werden können.

Selbstverständlich sind auch Ausführungsvarianten denkbar, bei denen die Spaltbreite in umfänglicher Richtung überhaupt nicht variiert bzw. im Wesentlichen konstant ist.

Bei einer bevorzugten Ausführungsform der erfindungsgemäßen Vorrichtung ist vorgesehen, dass zumindest entlang eines Abschnitts der Förderstrecke der Ofenschacht quer, insbesondere normal, zur Förderrichtung einen zumindest abschnittsweise runden, bevorzugt einen im Wesentlichen kreisförmigen oder im Wesentlichen elliptischen, Querschnitt aufweist, der von der Innenwand begrenzt ist. Während der Kreisquerschnitt zwar im Hinblick auf Verzugsspannungen am stabilsten ist, ist bei der Ellipse das Verhältnis von Umfang zu Querschnittsfläche in dem Sinne deutlich besser, dass mehr "Umfangsfläche" (der Innenwand) für die Energieabstrahlung zur Verfügung steht.

Der Querschnitt des Ofenschachts ist klarerweise ohne das ggf. vorhandene Leitelement zu verstehen.

"Im Wesentlichen" ist dabei so zu verstehen, dass gewisse Abweichungen von mathematisch perfekten Kreisen bzw. Ellipsen selbstverständlich möglich und in der Regel - schon allein herstellungstechnisch - sogar unvermeidbar sind. Ggf. können auch geringfügige Abweichungen von der mathematisch perfekten Kreis- bzw. Ellipsenform bewusst vorgesehen sein.

Vorzugsweise weist der einen Hohlraum darstellende Ofenschacht entlang der gesamten Förderstrecke die genannte Querschnittsform auf.

In Abschnitten kann dabei die Querschnittsform von der genannten runden / kreisförmigen / elliptischen Form abweichen, z.B. indem solche Abschnitte bzw. Teilstücke durch geradlinige Abschnitte bzw. Teilstücke verbunden sind. Selbstverständlich kann die Querschnittsform zumindest entlang eines Abschnitts der Förderstrecke aber auch vollkommen rund / kreisförmig / elliptisch sein.

Übergänge von Querschnittsform zu Querschnittsform sind vorzugsweise so gestaltet, dass es zu keinen Verwirbelungen der sich im Ofenschacht ausbildenden Strömung kommt.

Alternativ oder zusätzlich kann der Querschnitt auch Ecken aufweisen. Entsprechend ist es bei einer bevorzugten Ausführungsform der erfindungsgemäßen Vorrichtung vorgesehen, dass zumindest entlang eines Abschnitts der Förderstrecke der Ofenschacht quer, insbesondere normal, zur Förderrichtung einen zumindest abschnittsweise eckigen, bevorzugt einen im Wesentlichen rechteckigen oder im Wesentlichen quadratischen, Querschnitt aufweist, der von der Innenwand begrenzt ist. Der im Verhältnis zur Querschnittsfläche relativ große Querschnittsumfang kann sich als günstig erweisen, da hierdurch Platz für Heizelemente mit entsprechend großer Fläche geschaffen werden kann und sich mehr Fläche zur Energieübertragung auf das zu blähende Material zur Verfügung stellen lässt, als dies bei einem rein runden oder gar kreisförmigen Querschnitt der Fall wäre.

Der Querschnitt des Ofenschachts ist wiederum klarerweise ohne das ggf. vorhandene Leitelement zu verstehen.

"Im Wesentlichen" ist dabei so zu verstehen, dass gewisse Abweichungen von mathematisch perfekten Rechtecken bzw. Quadraten selbstverständlich möglich und in der Regel - schon allein herstellungstechnisch - sogar unvermeidbar sind. Ggf. können auch geringfügige Abweichungen von der mathematisch perfekten Rechteck- bzw. Quadratform bewusst vorgesehen sein. Insbesondere sind in der Praxis abgerundete Ecken möglich.

Vorzugsweise weist der einen Hohlraum darstellende Ofenschacht entlang des überwiegenden Teils der Förderstrecke, bevorzugt entlang der gesamten Förderstrecke, die genannte Querschnittsform auf.

In Abschnitten kann dabei die Querschnittsform von der genannten eckigen / rechteckigen / quadratischen Form abweichen, z.B. indem solche Abschnitte bzw. Teilstrecken durch runde Abschnitte bzw. Teilstrecken verbunden sind. Selbstverständlich kann die Querschnittsform zumindest entlang eines Abschnitts der Förderstrecke aber auch vollkommen eckig / rechteckig / quadratisch sein.

Übergänge von Querschnittsform zu Querschnittsform sind vorzugsweise so gestaltet, dass es zu keinen Verwirbelungen der sich im Ofenschacht ausbildenden Strömung kommt.

Bei einer bevorzugten Ausführungsform der erfindungsgemäßen Vorrichtung ist vorgesehen, dass die Innenwand durch mindestens ein Begrenzungselement ausgebildet ist, welches vorzugsweise aus hochwarmfestem Stahl gefertigt ist, und dass das mindestens eine Leitelement aus dem gleichen Material wie das mindestens eine Begrenzungselement gefertigt ist. Durch besagte Materialwahl wird die Erfüllung der gleichen Leistungsanforderungen an das Begrenzungselement wie für das Leitelement sichergestellt. Weiters hat die gleiche Materialwahl auch gleiche Wärmeausdehnungskoeffizienten zur Folge, wodurch ein Verzug durch unterschiedliche Wärmeausdehnung vermieden und eine gleichbleibende Spaltform sichergestellt werden kann.

Vorzugsweise ist der Ofen in radialer Richtung gesehen hinter dem Begrenzungselement aus einem oder mehreren anderen Materialien aufgebaut, insbesondere aus thermisch isolierenden Materialien.

Bei hochwarmfestem Stahl handelt es sich um an sich bekannte Sorten von Edelstahl.

Zum einen lässt sich mit Hilfe des Begrenzungselements auf konstruktiv einfache Weise erreichen, dass das in den Ofenschacht aufgegebenen Material nicht mit Heizelementen in Berührung kommen kann, die in radialer Richtung gesehen hinter dem Begrenzungselement angeordnet sind. Zum andern lässt sich mittels des mindestens einen Begrenzungselements eine gewünschte Querschnittsform des Ofenschachts sehr leicht realisieren und ggf. für unterschiedliche Anwendungen anpassen.

Die richtige bzw. eine geeignete Materialwahl des Begrenzungselements erlaubt dessen Einsatz in sämtlichen Temperaturbereichen, die in der Praxis eine Rolle spielen, ohne dass das Begrenzungselement in seiner Funktionsfähigkeit beeinträchtigt wird oder gar zu Schaden kommt. Beim Blähen von Perlit oder Obsidian kommen insbesondere metallische Materialien in Betracht. Es wäre in diesem Zusammenhang auch denkbar, das Begrenzungselement - insbesondere für andere Minerale, die eine höhere Kalziniertemperatur erfordern - nicht aus Metall, sondern aus einem anderen geeigneten Material, z.B. aus Kohlefaser oder (Hochleistungs-)Keramik, herzustellen.

Wie bereits mehrfach erwähnt, können Ausführungsformen vorgesehen sein, bei denen das zu blähende Material von unten in den Ofenschacht aufgegeben wird. Entsprechend ist es bei einer bevorzugten Ausführungsform der erfindungsgemäßen Vorrichtung vorgesehen, dass das mindestens eine Zuführmittel dazu eingerichtet ist, das ungeblähte Material gemeinsam mit einer Luftmenge am unteren Ende des Ofenschachts in Richtung oberes Ende des Ofenschachts so in den Ofenschacht einzusaugen, dass die Luftmenge eine von unten nach oben strömende Luftströmung ausbildet, mittels welcher das Material von unten nach oben entlang der Förderstrecke gefördert wird, um in der oberen (bzw. zweiten) Hälfte, vorzugsweise im obersten (bzw. dritten) Drittel, der Förderstrecke gebläht zu werden.

Denkbar wäre es z.B., die Luftmenge mittels einer Unterdruckquelle oder eines Ventilators durch eine dem Ofenschacht vorgeschaltete (Ansaug-)Düse anzusaugen und das Material, z.B. mittels einer Schurre, der in die Düse eintretenden Luftströmung zuzuführen. D.h. das mindestens eine Zuführmittel kann z.B. besagte Düse sowie an sich bekannte Mittel zur Erzeugung bzw. Ansaugung der Luftmenge - beispielsweise eine Unterdruckquelle und/oder ein (Luft-)Ventilator, wobei die Unterdruckquelle bzw. der Ventilator dem Ofenschacht nachgeschaltet ist/sind - sowie die Schurre umfassen. Dabei kann das Material dosiert zugeführt werden.

Bei einer besonders bevorzugten Ausführungsform der erfindungsgemäßen Vorrichtung ist entsprechend vorgesehen, dass das mindestens eine Zuführmittel zumindest eine dem Ofenschacht vorgeschaltete Ansaug-Düse umfasst, sowie vorzugsweise einen der Ansaug-Düse nachgeschalteten Diffusor.

Insbesondere der Diffusor kann dafür vorgesehen sein, das Material in der Luftmenge vor dem Blähprozess zu dispergieren und die relativ hohen Strömungsgeschwindigkeiten an der Ansaug-Düse zu reduzieren.

Wie bereits mehrfach erwähnt, können Ausführungsformen vorgesehen sein, bei denen das zu blähende Material von oben in den Ofenschacht aufgegeben wird. Entsprechend ist es bei einer bevorzugten Ausführungsform der erfindungsgemäßen Vorrichtung vorgesehen, dass das mindestens eine Zuführmittel dazu eingerichtet ist, das ungeblähte Material am oberen Ende des Ofenschachts in Richtung unteres Ende des Ofenschachts so in den Ofenschacht aufzugeben, dass das Material zumindest mittels der Schwerkraft von oben nach unten entlang der Förderstrecke gefördert wird, um in der unteren Hälfte, vorzugsweise im untersten Drittel, der Förderstrecke gebläht zu werden.

Das mindestens eine Zuführmittel kann entsprechend z.B. eine Schurre zur Zuführung des zu blähenden Materials umfassen.

Das mindestens eine Zuführmittel kann vorzugsweise weiters zumindest ein, insbesondere steuerbares, Ventil für das Material umfassen, um eine besonders genaue Dosierung des Materials zu ermöglichen.

Zusätzlich zur Schwerkraft können noch weitere Zuführ- bzw. Fördermittel vorgesehen sein, beispielsweise eine Prozessluft bzw. ein Prozessgas, die bzw. das von oben nach unten strömt bzw. in den Ofenschacht eingeblasen oder eingesaugt wird.

Der Vollständigkeit halber sei erwähnt, dass aufgrund der Erkenntnis, dass es sich bei dem Blähvorgang um einen isenthalpen Prozess handelt, der mit einem Temperatursturz einhergeht, letzterer gezielt detektiert bzw. lokalisiert werden kann - unabhängig davon, ob das zu blähende Material von oben oder unten in den Ofenschacht aufgegeben wird. Dies kann insbesondere wiederum dazu benutzt werden, eine Temperaturbehandlung der geblähten Sandkörner nach dem eigentlichen Blähvorgang festzulegen, um die Oberflächeneigenschaften der geblähten Sandkörner zu beeinflussen. Z.B. kann ein neuerliches Aufheizen über die kritische Temperatur verhindert werden, um ein Aufreißen der Oberfläche zu unterbinden. Oder es kann ein solcher erneuter Temperaturanstieg bewusst eingeleitet werden, wenn ein Aufreißen der Oberfläche der Sandkörner bewusst in Kauf genommen oder sogar erzielt werden soll.

Bei der erfindungsgemäßen Vorrichtung ist, wie gesagt, vorgesehen, dass für das mindestens eine Leitelement lösbare Befestigungsmittel vorgesehen sind, um das mindestens eine Leitelement bedarfsweise aus dem Ofenschacht herausnehmen und wieder einsetzen zu können. D.h. das Leitelement ist herausnehmbar bzw. wiedereinsetzbar.

Die Vorrichtung wird hierdurch weit universeller einsetzbar, da einerseits das Leitelement problemlos komplett entfernt werden kann, wenn Aufgabefraktionen mit sehr groben Körnungen, insbesondere mit Durchmessern von einigen hundert Mikrometern oder mehr, gebläht werden sollen. Andererseits können natürlich auch unterschiedliche Leitelemente, die optimal auf die jeweilige Aufgabefraktion abgestimmt sind, bedarfsweise problemlos ein- / aus- bzw. umgebaut werden.

Typischerweise erfolgt der Aus- bzw. Einbau des jeweiligen Leitelements bei relativ niedriger Temperatur, insbesondere bei Raumtemperatur, wobei ggf. zunächst das Abkühlen der Vorrichtung nach einem Produktionsvorgang abgewartet wird.

Der guten Ordnung halber sei bemerkt, dass unter "lösbar" wie üblich "zerstörungsfrei lösbar" zu verstehen ist, woraus sich eine Wiederverwendbarkeit ergibt.

Entsprechend geeignete Befestigungsmittel sind an sich zur Genüge bekannt. Insbesondere kommen als geeignete Befestigungsmittel unterschiedlichste Schraubverbindungen und/oder an sich bekannte, mit Formschluss arbeitende Verbindungen wie z.B. Haken-Öse-Kombinationen, Sicherungsbolzen oder Bajonettverschlüsse oder beliebige Kombinationen solcher Verbindungen in Frage.

Wie oben bereits ausgeführt, kann das Leitelement aus unterschiedlichsten Materialien gefertigt sein. Bei einer bevorzugten Ausführungsform der erfindungsgemäßen Vorrichtung ist vorgesehen, dass das mindestens eine Leitelement aus Metall, insbesondere aus hochwarmfestem Stahl, gefertigt ist. Zum einen ist hierdurch sichergestellt, dass das Leitelement in sämtlichen Temperaturbereichen, die in der Praxis beim Blähen, insbesondere von Perlit oder Obsidian, eine Rolle spielen, eingesetzt werden kann, ohne dass das Leitelement in seiner Funktion beeinträchtigt wird oder gar zu Schaden kommt. Zum anderen bewirkt die genannte Materialwahl des Leitelements eine besonders gute Reflexion bzw. Emission der Hitze bzw. der durch die Heizelemente verursachten Wärmestrahlung. D.h. das Leitelement eignet sich somit optimal als passive Heizquelle, wie oben bereits näher erläutert, was Energie und Kosten spart.

Bei einer bevorzugten Ausführungsform der erfindungsgemäßen Vorrichtung ist vorgesehen, dass zumindest entlang der gesamten Erstreckung des mindestens einen Leitelements im Ofenschacht, vorzugsweise entlang der gesamten Erstreckung des mindestens einen Leitelements parallel zur Förderrichtung, zwischen dem mindestens einen Leitelement und einem radialen Zentrum des Ofenschachts ein Freiraum angeordnet ist. Es ist dabei nicht ausgeschlossen, dass das Leitelement außerhalb des Ofenschachts so geformt ist, dass ein Abschnitt des Leitelements im Bereich der Längsachse des Ofenschachts, die innerhalb des Ofenschachts typischerweise deckungsgleich mit dem radialen Zentrum des Ofenschachts verläuft, angeordnet ist.

Zum einen erlaubt besagter Freiraum, dass im Bereich des radialen Zentrums Luft/Gase, insbesondere die bereits erwähnte Kaminströmung, aus dem Ofenschacht entweichen kann. Zum anderen kann der Freiraum dazu benutzt werden, Zwangsluft von außen in den Ofenschacht einzubringen, mit der die Strömungsverhältnisse im Ofenschacht und damit die Verweilzeit des Rohsands bzw. nach Expansion des Expansionsguts im Ofenschacht beeinflusst werden können.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: in einer schematischen Schnittansicht eine Ausführungsform einer erfindungsgemäßen Vorrichtung zur Herstellung eines geblähten Granulats, wobei die Aufgabe bzw. Förderung des zu blähenden Granulats in einen bzw. einem Ofenschacht von oben nach unten erfolgt
- Fig. 2: in einer schematischen Schnittansicht eine weitere Ausführungsform der erfindungsgemäßen Vorrichtung, wobei die Aufgabe bzw. Förderung des zu blähenden Granulats in den bzw. im Ofenschacht von unten nach oben erfolgt

### WEGE ZUR AUSFÜHRUNG DER ERFINDUNG

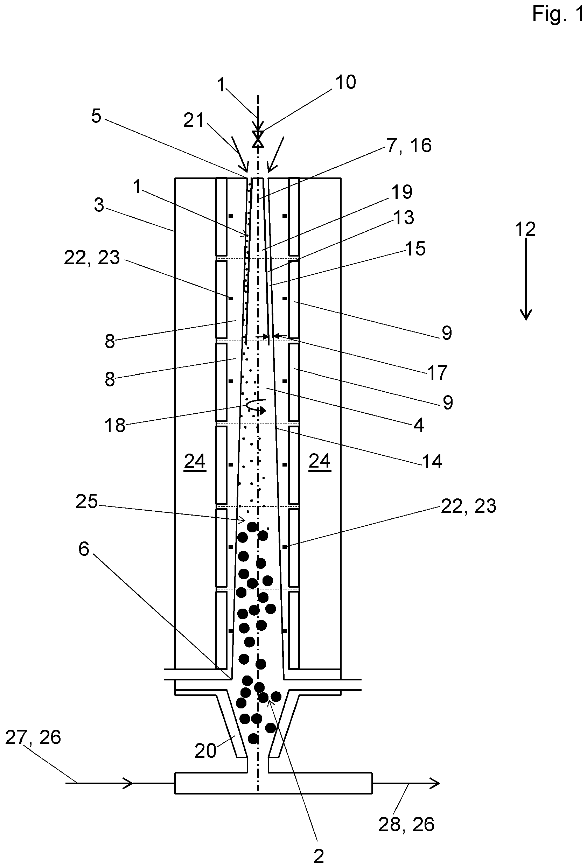

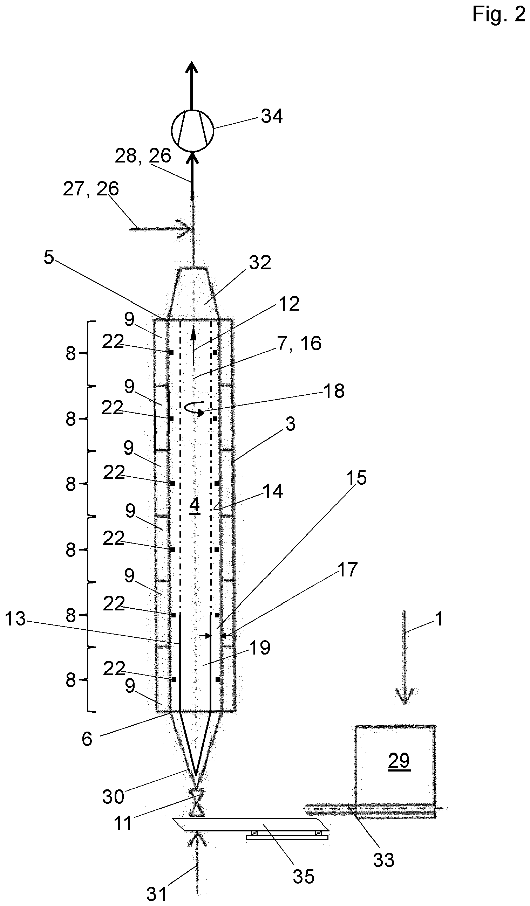

Fig. 1 zeigt eine erfindungsgemäße Vorrichtung zur Herstellung eines geblähten Granulats 2 aus sandkornförmigem, mineralischem Material mit einem Treibmittel. Im dargestellten Ausführungsbeispiel handelt es sich bei besagtem Material um Perlitsand 1, in welchem Wasser gebunden ist (sog. Kristallwasser) und als Treibmittel fungiert. Die Vorrichtung umfasst einen Ofen 3 mit einem im Wesentlichen senkrecht stehenden Ofenschacht 4, der ein oberes Ende 5 und ein unteres Ende 6 aufweist. Zwischen den beiden Enden 5, 6 verläuft eine Förderstrecke 7, die in Fig. 1 durch eine strichpunktierte Linie angedeutet ist (in Fig. 2 durch eine strichlierte Linie), wobei die strichpunktierte Linie in Fig. 1 (in Fig. 2 die strichlierte Linie) auch ein radiales Zentrum 16 des Ofenschachts 4 markiert. Die Förderstrecke 7 führt durch mehrere, in einer Förderrichtung 12 voneinander getrennt angeordnete Heizzonen 8 (in Fig. 1 durch horizontale, punktierte Linien angedeutet), wobei die Heizzonen 8 jeweils zumindest ein voneinander unabhängig steuerbares Heizelement 9 aufweisen, um den Perlitsand 1 insbesondere auf eine kritische Temperatur zu erhitzen und die Perlitsandkörner 1 zu blähen.

Die Heizelemente 9 sind in den dargestellten Ausführungsbeispielen elektrisch betrieben und können von einer (nicht dargestellten) Regel- und Steuereinheit gesteuert werden.

Die Vorrichtung umfasst weiters Zuführmittel, welche im Ausführungsbeispiel der Fig. 1 ein Ventil 10 zur Regelung der Aufgabe des Perlitsands 1 sowie Prozessluft 21 beinhalten und dazu eingerichtet sind, den ungeblähten Perlitsand 1 (samt Prozessluft 21) am oberen Ende 5 des Ofenschachts 4 in Richtung des unteren Endes 6 des Ofenschachts 4 in den Ofenschacht 4 aufzugeben, um den Perlitsand 1 in Förderrichtung 12 gesehen in der letzten Hälfte, vorzugsweise im letzten Drittel, der Förderstrecke 7 zu blähen. D.h. im Ausführungsbeispiel der Fig. 1 erfolgt die Förderung des Perlitsands 1 primär mittels der Schwerkraft von oben nach unten entlang der Förderstrecke 7, wobei die ggf. mit dem Perlitsand 1 eingeblasene oder eingesaugte Prozessluft 21 die Fallbewegung des Perlitsands 1 unterstützt.

Die durch den Ofenschacht 4 von oben nach unten strömende Prozessluft 21 erfährt dabei eine Erwärmung. Dies kann prinzipiell zu einer Erhöhung der Strömungsgeschwindigkeit im Ofenschacht 4 führen, wodurch die Verweilzeit aller Perlitsandpartikel 1 im Ofenschacht 4 verkürzt werden kann. Um dies zu vermeiden und die Zunahme der Strömungsgeschwindigkeit der ersten Prozessluft zu kompensieren bzw. die Strömungsgeschwindigkeit annähernd konstant zu halten, ist der Ofenschacht 4 Ausführungsbeispiel der Fig. 1 nach unten hin weiter ausgeführt als oben. D.h. der Querschnitt des Ofenschachts 4 normal auf die Förderrichtung 12 nimmt vom oberen Ende 5 zum unteren Ende 6 hin zu.

Es sei jedoch betont, dass auch bei Aufgabe des Perlitsands 1 am oberen Ende 5 des Ofenschachts 4 selbstverständlich auch Ofenschächte 4 mit konstantem oder annähernd konstantem Querschnitt möglich sind.

Der Querschnitt des Ofenschachts 4 wird von einer Innenwand 14 des Ofenschachts 4 begrenzt, die in den dargestellten Ausführungsbeispielen durch mindestens ein Begrenzungselement aus hochwarmfestem Stahl ausgebildet ist.

Nach außen hin ist der Ofenschacht 4 bzw. der Ofen 3 mittels einer Wärmeisolierung 24 thermisch isoliert.

An vertikal voneinander beabstandeten Positionen 22 sind Temperatursensoren 23 angeordnet, wobei in jeder Heizzone 8 zumindest ein Temperatursensor 23 liegt. Im gezeigten Ausführungsbeispiel der Fig. 1 wird also die Temperatur des Perlitsands 1 über die in der jeweiligen Heizzone 8 vorherrschende Temperatur ermittelt.

Heizelemente 9 und Temperatursensoren 23 sind mit der Regel- und Steuereinheit (nicht dargestellt) verbunden, die die Position bzw. den Bereich 25 im Ofenschacht 4, an welcher bzw. in welchem die Blähung der Perlitsandkörner 1 stattfindet, aufgrund der Temperaturdaten bestimmt. An dieser Position bzw. in diesem Bereich 25 tritt eine deutliche Verminderung der Temperatur, ein Temperatursturz von beispielsweise über 100°C, des geblähten Perlitsands 1 auf. Dieser Temperatursturz ist Folge des isenthalpen Blähvorgangs des Perlitsands 1, wobei der Blähvorgang zustande kommt durch ein Weichwerden der Oberfläche der Perlitsandkörner 1 gefolgt von einem Ausdehnungsvorgang aufgrund des sich in den Perlitsandkörnern 1 bildenden Wasserdampfs bzw. Wasserdampfdrucks. Z.B. kann der Perlitsand 1 unmittelbar vor seiner Blähung ca. 780°C haben und unmittelbar nach dem isenthalpen Blähvorgang nur noch ca. 590°C, d.h. ein Temperatursturz von 190°C tritt in diesem Beispiel auf, wobei je nach Material der Temperatursturz typischerweise mindestens 20°C beträgt, vorzugsweise mindestens 100°C. Mittels der Regel- und Steuereinheit (nicht dargestellt) können jene Heizelemente 9, die in Förderrichtung 12 gesehen nach der Position bzw. dem Bereich 25 des Temperatorsturzes liegen, gezielt bzw. automatisch geregelt werden, damit ein gewünschter Energieeintrag erfolgen kann.

Es sei bemerkt, dass sich der vorgenannte Temperatursturz bei dieser automatischen Regelung nicht notwendigerweise als Temperaturabfall zeigt, sondern ggf. als Bereich, in dem mehr Energie benötigt wird, um die Temperatur zu halten, sodass auf den Einsatz der Temperatursensoren 23 zur Detektion des Temperatursturzes auch verzichtet werden kann.

Insbesondere kann die Regelung dieser Heizelemente 9 so erfolgen, dass keine weitere bzw. nochmalige Erhöhung der Temperatur des geblähten Perlitsands bzw. Granulats 2 mehr erfolgt bzw. sichergestellt wird, dass das geblähte Granulat 2 geschlossenzellig ist.

Das geblähte Granulat 2 wird beim Ausführungsbeispiel der Fig. 1 am unteren Ende 6 ausgetragen und über eine wassergekühlte Schurre 20 einer, mit kühler Luft 27 arbeitenden Flugstromförderung/Saugströmung 26 zugeführt. Die kühle Luft 27 bzw. die kühle Luft 28 mit expandiertem Perlitsand 2 wird z.B. von einer Vakuumpumpe oder einem Ventilator (nicht dargestellt) angesaugt.

Die erfindungsgemäße Vorrichtung weist zumindest ein Leitelement 13 auf, das zumindest abschnittsweise im Ofenschacht 4 angeordnet ist, wobei das Leitelement 13 zumindest im Bereich des einen der beiden Enden 5, 6 des Ofenschachts 4 mit der Innenwand 14 des Ofenschachts 4 einen Spalt 15 ausbildet, wobei das mindestens eine Zuführmittel zur Aufgabe des ungeblähten Perlitsands 1 in den Spalt 15 eingerichtet ist.

Im Ausführungsbeispiel der Fig. 1 ist das Leitelement 13 entsprechend im Bereich des oberen Endes 5 angeordnet. Das Ventil 10 und die Prozessluft 21 sind so eingerichtet, dass der Perlitsand 1 dem Spalt 15 im Bereich des oberen Endes 5 zugeführt wird. D.h. der Perlitsand 1 tritt beim Eintritt in den Spalt 15 in den Ofenschacht 4 ein.

Es sei betont, dass im Ausführungsbeispiel der Fig. 1 der Perlitsand 1 am oberen Ende 5 über den gesamten Spalt 15 eingebracht wird, in Fig. 1 aus Klarheitsgründen jedoch nur Perlitsand 1 eingezeichnet ist, der im Bild auf der linken Seite in den Spalt 15 eingebracht wird.

Das Leitelement 13 schirmt den Perlitsand 1 von einer nach oben gerichteten Strömung erhitzter Luft/Gase ("Kaminströmung") ab, die sich im Bereich des radialen Zentrums 16 des Ofenschachts 4 ausbildet. So wird verhindert, dass sehr feine Körnungen mit Durchmessern kleiner als 100 µm, insbesondere kleiner als 75 µm, von der Kaminströmung am Herabfallen gehindert werden und nicht wie gewünscht blähen. Letzteres wird insbesondere dadurch hervorgerufen, dass ohne Leitelement 13 die Perlitsandpartikel 1 - nach ihrer Abkühlung aufgrund des isenthalpen Blähprozesses - wieder aufgeheizt werden. Dies bewirkt, dass die Perlitsandpartikel 1 erneut weich werden, wobei die Perlitsandpartikel 1 aber nicht mehr isenthalp durch Formänderung abkühlen können und somit ein erhöhtes Risiko der Agglomeration an der Innenwand 14 entsteht.

Besagte Kaminströmung kann nach oben problemlos aus dem Ofenschacht 4 durch einen Freiraum 19 entweichen. Dieser Freiraum 19 ist, entlang der gesamten Erstreckung des Leitelements 13 parallel zur Förderrichtung 12, zwischen dem Leitelement 13 und dem radialen Zentrum 16 des Ofenschachts 4 angeordnet bzw. gebildet.

Weiters leitet das Leitelement 13 den Perlitsand 1 gezielt nahe entlang der Innenwand 14, wodurch eine zeitlich und örtlich gleichmäßige Erwärmung aller Perlitsandkörner 1 stattfindet, was wiederum ein gleichmäßiges Blähergebnis nach sich zieht.

Im Ausführungsbeispiel der Fig. 1 erstreckt sich das Leitelement 13 im Ofenschacht 4 vom oberen Ende 5 bis ungefähr zum Ende des ersten Drittels der Förderstrecke 7. Die durch das Leitelement 13 bewirkte Vergleichmäßigung der Bewegung, insbesondere der Bewegungsrichtung, der Perlitsandkörner 1 im Spalt 15 wirkt jedoch auch noch ein Stück weit über Ende des Leitelements 13 hinaus.

Das Leitelement 13 ist in den dargestellten Ausführungsbeispielen aus hochwarmfestem Stahl gefertigt und reflektiert entsprechend gut die durch die Heizelemente 9 verursachte Wärmestrahlung. D.h. das Leitelement 13 wirkt zusätzlich als passive Heizung für den zwischen der Innenwand 14 und dem Leitelement 13 befindlichen Perlitsand 1.

Im Ausführungsbeispiel der Fig. 1 ist das Leitelement 13 vollständig im Ofenschacht 4 angeordnet und entsprechend in diesem befestigt, wobei zur Befestigung gemäß der Erfindung lösbare Befestigungsmittel (nicht dargestellt) vorgesehen sind, um das Leitelement 13 bedarfsweise aus dem Ofenschacht 4 herausnehmen und wieder einsetzen zu können. Abgesehen von Bereichen entlang der Förderrichtung 12 gesehen, wo besagte Befestigungselemente vorgesehen sind, erstreckt sich der Spalt 15 vollumfänglich um das radiale Zentrum 16 des Ofenschachts 4.

Wie aus der Schnittansicht der Fig. 1 hervorgeht, ist die Form des Leitelements 13 an den Querschnitt des Ofenschachts 4 angepasst, indem das Leitelement 13 grundsätzlich parallel zur Innenwand 14 verläuft. Entsprechend weist der Spalt 15 eine Spaltbreite 17 auf, die im dargestellten Ausführungsbeispiel über die gesamte Erstreckung des Leitelements 13 in Förderrichtung 12 nur geringfügig variiert und vorzugsweise annähernd konstant ist. Es sei jedoch bemerkt, dass auch Ausführungsvarianten möglich sind, bei denen die Spaltbreite 17 in Förderrichtung 12 um mindestens 50% variiert, um die Verweilzeit der Perlitsandkörner 1 in verschiedenen Bereichen entlang der Förderstrecke 7 gezielt einzustellen.

Weiters variiert im Ausführungsbeispiel der Fig. 1 die Spaltbreite 17 auch in umfänglicher Richtung 18 kaum und ist vorzugsweise annähernd konstant. Dies gilt für sämtliche Positionen bzw. Bereiche entlang der Förderstrecke 7, über die sich das Leitelement 13 erstreckt, insbesondere im Bereich der Aufgabe des Perlitsands 1, d.h. beim Ausführungsbeispiel der Fig. 1 im Bereich des oberen Endes 5. Es sei jedoch bemerkt, dass auch Ausführungsvarianten möglich sind, bei denen die Spaltbreite 17 in umfänglicher Richtung 18 deutlich variiert, wenngleich typischerweise klar weniger als in Förderrichtung 12, z.B. höchstens 5%.

Augenscheinlichster Unterschied der in Fig. 2 dargestellten Ausführungsvariante gegenüber jener der Fig. 1 ist die Aufgabe des zu blähenden Perlitsands 1 (aus Klarheitsgründen in Fig. 2 nicht extra dargestellt) von unten in den Ofenschacht 4, wobei die Förderrichtung 12 von unten nach oben weist. Entsprechend ist das mindestens eine Leitelement 3 zumindest im Bereich des unteren Endes 6 des Ofenschachts 4 im Ofenschacht 4 angeordnet und bildet dort gemeinsam mit der Innenwand 14 den Spalt 15 aus. Das mindestens eine Zuführmittel umfasst in diesem Fall eine dem Ofenschacht 4 vorgeschaltete Ansaug-Düse 11 sowie einen Ventilator 34 und ist dazu eingerichtet, den ungeblähten Perlitsand 1 gemeinsam mit einer Luftmenge am unteren Ende 6 des Ofenschachts 4 in Richtung oberes Ende 5 des Ofenschachts 4 so in den Ofenschacht 4 einzusaugen, dass der Perlitsand 1 in den Spalt 15 aufgegeben wird. Die Luftmenge bildet dabei eine von unten nach oben strömende Luftströmung aus, mittels welcher der Perlitsand 1 von unten nach oben entlang der Förderstrecke 7 gefördert wird, um in der oberen Hälfte, vorzugsweise im obersten Drittel, der Förderstrecke 7 gebläht zu werden.

Die Zuführmittel umfassen im Ausführungsbeispiel der Fig. 2 außerdem einen der Ansaug-Düse 11 nachgeschalteten Diffusor 30, an den das untere Ende 6 des Ofenschachts 4 anschließt. Der Diffusors 30 kann dazu beitragen, den Perlitsand 1 in der Luftmenge vor dem Blähprozess zu dispergieren, um eine gleichmäßige Verteilung des Perlitsandes 1 in der Luftströmung zu erzielen bzw. zu unterstützen.

Die Ansaug-Düse 11 wird über eine Vibrationsrinne 35 mit Perlitsand 1 versorgt, wobei der Perlitsand 1 der Vibrationsrinne 35 aus einem Vorratsbehälter 29 über eine Dosierschnecke 33 dosiert zugeführt wird. Zusätzlich wird über die Ansaug-Düse 11 (mittels des Ventilators 34) auch Luft angesaugt, wodurch ein Saugluftstrom 31 ausgebildet wird. Die Luftströmung bzw. der Saugluftstrom 31 kann dabei durch geeignete Wahl bzw. Auslegung der Ansaug-Düse 11 und/oder durch Wahl einer geeigneten Ansauggeschwindigkeit (mittels des Ventilators 34) eingestellt werden. Letzteres kann grundsätzlich ebenfalls mittels der Regel- und Steuereinheit (nicht dargestellt) automatisiert erfolgen.

Das Leitelement 13 erstreckt sich im Ausführungsbeispiel der Fig. 2 über ca. ein bzw. das erste Viertel der Förderstrecke 7 und kann sich jedoch auch noch deutlich weiter erstrecken, insbesondere über die gesamte Förderstrecke 7 im Ofenschacht 4. Letzteres ist in Fig. 2 durch die strichpunktierten Linien angedeutet.

Das Leitelement 13 ist auch im Ausführungsbeispiel der Fig. 2 grundsätzlich an die Querschnittsform des Ofenschachts 4 angepasst. Wie auch im Ausführungsbeispiel der Fig. 1 variiert die Spaltbreite 17 im Ausführungsbeispiel der Fig. 2 in umfänglicher Richtung 18 kaum und ist vorzugsweise im Wesentlichen konstant. Dies gilt für sämtliche Positionen bzw. Bereiche entlang der Förderstrecke 7, über die sich das Leitelement 13 erstreckt, insbesondere im Bereich der Aufgabe des Perlitsands 1, d.h. beim Ausführungsbeispiel der Fig. 2 im Bereich des unteren Endes 6. Es sei jedoch auch in diesem Fall bemerkt, dass auch Ausführungsvarianten möglich sind, bei denen die Spaltbreite 17 in umfänglicher Richtung 18 deutlich variiert, wenngleich typischerweise klar weniger als in Förderrichtung 12, z.B. höchstens um 5%.

Obgleich in Fig. 2 eine Variation der Spaltbreite 17 in Förderrichtung 12 nicht dargestellt ist, kann entlang der Förderstrecke 7 bzw. in Förderrichtung 12 die Spaltbreite 17 auch im in Fig. 2 dargestellten Ausführungsbeispiel weit stärker als in umfänglicher Richtung 18 variieren - beispielsweise um mindestens 50% -, um die Verweilzeit der Perlitsandkörner 1 in verschiedenen Bereichen entlang der Förderstrecke 7 gezielt einzustellen.

Bei beiden gezeigten Ausführungsvarianten beträgt die Spaltbreite 17 jedoch höchstens 10 cm.

Im Ausführungsbeispiel der Fig. 2 ist das Leitelement 13 im Diffusor 30, vorzugsweise herausnehmbar, befestigt. Entsprechend ist entlang der Förderrichtung 12 gesehen vollständig eine Erstreckung des Spalts 15 vollumfänglich um das radiale Zentrum 16 gegeben.

Im Ausführungsbeispiel der Fig. 2 findet grundsätzlich eine absolute Temperaturmessung statt (Temperatursensoren sind aus Klarheitsgründen allerdings nicht dargestellt). Zusätzlich wird die Leistungsaufnahme der Heizelemente 9 bestimmt bzw. wird bestimmt, wie sich diese Leistungsaufnahme entlang der Förderstrecke 7 ändert. Unmittelbar nach dem Blähvorgang und dem damit einhergehenden Temperatursturz ist die Temperaturdifferenz zwischen dem geblähten Granulat 2 (aus Klarheitsgründen in Fig. 2 nicht extra dargestellt) und den Heizelementen 9 deutlich größer als zwischen dem Perlitsand 1 und den Heizelementen 9 unmittelbar vor dem Blähvorgang. Entsprechend nimmt auch der Wärmefluss zu, sofern die gemessene Temperatur konstant gehalten wird. D.h. die festgestellte Änderung des Wärmeflusses bzw. der Leistungsaufnahme der Heizelemente 9 von einer Heizzone 8 zur nächsten ist eine Zunahme, wohingegen aufgrund der sukzessiven Erwärmung des Perlitsands 1 vor dem Blähvorgang die Änderung der Leistungsaufnahme entlang der Förderstrecke 7 eine Abnahme ist.

Zur Regelung, insbesondere zur Regelung entlang der nach dem Temperatursturz verbleibenden Förderstrecke 7, sind die Heizelemente 9 mit der Regel- und Steuereinheit (nicht dargestellt) verbunden, sodass z.B. eine Zunahme der Materialtemperatur entlang der verbleibenden Förderstrecke 7 auf oder über die kritische Temperatur gezielt verhindert oder ermöglicht werden kann.

Die Austragung des geblähten Granulats 2 aus dem Ofenschacht 4 erfolgt (gemeinsam mit angewärmter Luft) über einen an das obere Ende 5 des Ofenschachts 4 anschließenden Sammelabschnitt 32. Mittels Flugstromförderung/Saugströmung 26, die mit kühler Luft 27 arbeitet, wird das geblähte Granulat 2 weiter befördert. Die kühle Luft 27 bzw. die kühle Luft 28 mit expandiertem Perlitsand 2 wird dabei, wie bereits erwähnt, z.B. von einer Vakuumpumpe oder einem Ventilator (nicht dargestellt) angesaugt.

### BEZUGSZEICHENLISTE

- 1: Perlitsand
- 2: Geblähtes Granulat
- 3: Ofen
- 4: Ofenschacht
- 5: Oberes Ende des Ofenschachts
- 6: Unteres Ende des Ofenschachts
- 7: Förderstrecke
- 8: Heizzone
- 9: Heizelement
- 10: Ventil
- 11: Ansaug-Düse
- 12: Förderrichtung
- 13: Leitelement
- 14: Innenwand des Ofenschachts
- 15: Spalt
- 16: Radiales Zentrum des Ofenschachts
- 17: Spaltbreite
- 18: Umfängliche Richtung
- 19: Freiraum
- 20: Wassergekühlte Schurre
- 21: Prozessluft
- 22: Position für Temperaturmessung
- 23: Temperatursensor
- 24: Wärmeisolierung
- 25: Position bzw. Bereich des Temperatursturzes
- 26: Flugstromförderung/Saugströmung
- 27: Kühle Luft der Flugstromförderung
- 28: Kühle Luft mit geblähtem Perlitsand bzw. geblähtem Granulat
- 29: Vorratsbehälter
- 30: Diffusor
- 31: Saugluftstrom
- 32: Sammelabschnitt
- 33: Dosierschnecke
- 34: Ventilator
- 35: Vibrationsrinne

## Patentansprüche

1. Vorrichtung zur Herstellung eines geblähten Granulats (2) aus sandkornförmigem, mineralischem Material (1) mit einem Treibmittel, beispielsweise zur Herstellung eines geblähten Granulats (2) aus Perlit- (1) oder Obsidiansand mit gebundenem Wasser als Treibmittel, die Vorrichtung umfassend einen Ofen (3) mit einem im Wesentlichen senkrecht stehenden Ofenschacht (4), der ein oberes Ende (5) und ein unteres Ende (6) aufweist, wobei zwischen den beiden Enden (5, 6) eine Förderstrecke (7) verläuft, welche durch mehrere, in einer Förderrichtung (12) voneinander getrennt angeordnete Heizzonen (8) führt, wobei die Heizzonen (8) jeweils zumindest ein voneinander unabhängig steuerbares Heizelement (9) aufweisen, um das Material (1) zumindest auf eine kritische Temperatur zu erhitzen und die Sandkörner (1) zu blähen, wobei weiters mindestens ein Zuführmittel (10, 11) vorgesehen ist, das dazu eingerichtet ist, zumindest das ungeblähte Material (1) an einem der beiden Enden (5, 6) des Ofenschachts (4) in Richtung des anderen der beiden Enden (6, 5) des Ofenschachts (4) in den Ofenschacht (4) aufzugeben, um das Material (1) in Förderrichtung (12) gesehen in der letzten Hälfte, vorzugsweise im letzten Drittel, der Förderstrecke (7) zu blähen, wobei zumindest ein Leitelement (13) vorgesehen ist, das zumindest abschnittsweise im Ofenschacht (4) angeordnet ist, wobei das Leitelement (13) zumindest im Bereich des einen der beiden Enden (5, 6) des Ofenschachts (4) mit einer Innenwand (14) des Ofenschachts (4) einen Spalt (15) ausbildet, wobei das mindestens eine Zuführmittel (10, 11) zur Aufgabe des ungeblähten Materials (1) in den Spalt (15) eingerichtet ist, **dadurch gekennzeichnet, dass** für das mindestens eine Leitelement (13) lösbare Befestigungsmittel vorgesehen sind, um das mindestens eine Leitelement (13) bedarfsweise aus dem Ofenschacht (4) herausnehmen und wieder einsetzen zu können.

2. Vorrichtung nach Anspruch 1, **dadurch gekennzeichnet, dass** sich das mindestens eine Leitelement (13) in Förderrichtung (12) gesehen höchstens bis zum Ende der ersten Hälfte, bevorzugt höchstens bis zum Ende des ersten Drittels, besonders bevorzugt höchstens bis zum Ende des ersten Viertels, der Förderstrecke (7) erstreckt.

3. Vorrichtung nach einem der Ansprüche 1 bis 2, **dadurch gekennzeichnet, dass** sich das mindestens eine Leitelement (13) über mindestens ein Viertel der Förderstrecke (7) erstreckt.

4. Vorrichtung nach einem der Ansprüche 1 bis 3, **dadurch gekennzeichnet, dass** sich der Spalt (15) entlang der Förderrichtung (12) gesehen zumindest abschnittsweise um ein radiales Zentrum (16) des Ofenschachts (4) vollumfänglich erstreckt.

5. Vorrichtung nach einem der Ansprüche 1 bis 4, **dadurch gekennzeichnet, dass** der Spalt (15) eine Spaltbreite (17) aufweist, die in Förderrichtung (12) um mindestens 50%, bevorzugt um mindestens 65%, besonders bevorzugt um mindestens 80%, variiert, wobei die Spaltbreite (17) vorzugsweise höchstens 10 cm beträgt.

6. Vorrichtung nach einem der Ansprüche 1 bis 5, **dadurch gekennzeichnet, dass** der Spalt (15) eine Spaltbreite (17) aufweist, die in einer umfänglichen Richtung (18) rund um ein radiales Zentrum (16) des Ofenschachts (4) um höchstens 35%, bevorzugt um höchstens 10%, besonders bevorzugt um höchstens 5%, variiert, wobei die Spaltbreite (17) vorzugsweise höchstens 10 cm beträgt.

7. Vorrichtung nach einem der Ansprüche 1 bis 6, **dadurch gekennzeichnet, dass** zumindest entlang eines Abschnitts der Förderstrecke (7) der Ofenschacht (4) quer, insbesondere normal, zur Förderrichtung (12) einen zumindest abschnittsweise runden, bevorzugt einen im Wesentlichen kreisförmigen oder im Wesentlichen elliptischen, Querschnitt aufweist, der von der Innenwand (14) begrenzt ist.

8. Vorrichtung nach einem der Ansprüche 1 bis 7, **dadurch gekennzeichnet, dass** zumindest entlang eines Abschnitts der Förderstrecke (7) der Ofenschacht (4) quer, insbesondere normal, zur Förderrichtung (12) einen zumindest abschnittsweise eckigen, bevorzugt einen im Wesentlichen rechteckigen oder im Wesentlichen quadratischen, Querschnitt aufweist, der von der Innenwand (14) begrenzt ist.

9. Vorrichtung nach einem der Ansprüche 1 bis 8, **dadurch gekennzeichnet, dass** die Innenwand (14) durch mindestens ein Begrenzungselement ausgebildet ist, welches vorzugsweise aus hochwarmfestem Stahl gefertigt ist, und dass das mindestens eine Leitelement (13) aus dem gleichen Material wie das mindestens eine Begrenzungselement gefertigt ist.

10. Vorrichtung nach einem der Ansprüche 1 bis 9, **dadurch gekennzeichnet, dass** das mindestens eine Zuführmittel (11) dazu eingerichtet ist, das ungeblähte Material (1) gemeinsam mit einer Luftmenge am unteren Ende (6) des Ofenschachts (4) in Richtung oberes Ende (5) des Ofenschachts (4) so in den Ofenschacht (4) einzusaugen, dass die Luftmenge eine von unten nach oben strömende Luftströmung ausbildet, mittels welcher das Material (1) von unten nach oben entlang der Förderstrecke (7) gefördert wird, um in der oberen Hälfte, vorzugsweise im obersten Drittel, der Förderstrecke (7) gebläht zu werden.

11. Vorrichtung nach Anspruch 10, **dadurch gekennzeichnet, dass** das mindestens eine Zuführmittel zumindest eine dem Ofenschacht (4) vorgeschaltete Ansaug-Düse (11) umfasst, sowie vorzugsweise einen der Ansaug-Düse (11) nachgeschalteten Diffusor (30).

12. Vorrichtung nach einem der Ansprüche 1 bis 9, **dadurch gekennzeichnet, dass** das mindestens eine Zuführmittel (10) dazu eingerichtet ist, das ungeblähte Material (1) am oberen Ende (5) des Ofenschachts (4) in Richtung unteres Ende (6) des Ofenschachts (4) so in den Ofenschacht (4) aufzugeben, dass das Material (1) zumindest mittels der Schwerkraft von oben nach unten entlang der Förderstrecke (7) gefördert wird, um in der unteren Hälfte, vorzugsweise im untersten Drittel, der Förderstrecke (7) gebläht zu werden.

13. Vorrichtung nach einem der Ansprüche 1 bis 12, **dadurch gekennzeichnet, dass** das mindestens eine Leitelement (13) aus Metall, insbesondere aus hochwarmfestem Stahl, gefertigt ist.

14. Vorrichtung nach einem der Ansprüche 1 bis 13,
**dadurch gekennzeichnet, dass** zumindest entlang der gesamten Erstreckung des mindestens einen Leitelements (13) im Ofenschacht (4), vorzugsweise entlang der gesamten Erstreckung des mindestens einen Leitelements (13) parallel zur Förderrichtung (12), zwischen dem mindestens einen Leitelement (13) und einem radialen Zentrum (16) des Ofenschachts (4) ein Freiraum (19) angeordnet ist.

## Claims

1. Device for producing an expanded granulate (2) from mineral material in the form of grains of sand (1) with an expanding agent, for example for producing an expanded granulate (2) from perlite sand (1) or obsidian sand with bonded water as expanding agent, the device comprising a furnace (3) with a substantially vertical furnace shaft (4) having an upper end (5) and a lower end (6), wherein a conveying section (7) extends between the two ends (5, 6) which passes through a plurality of heating zones (8) arranged separately from one another in a conveying direction (12), wherein the heating zones (8) each comprise at least one heating element (9) which can be controlled independently of one another in order to heat the material (1) at least to a critical temperature and to expand the sand grains (1), wherein furthermore at least one feeding means (10, 11) is provided, which is adapted to feed at least the unexpanded material (1) at one of the two ends (5, 6) of the furnace shaft (4) into the furnace shaft (4) in the direction of the other of the two ends (6, 5) of the furnace shaft (4) in order to expand the material (1), as viewed in conveying direction (12), in the last half, preferably in the last third, of the conveying section (7), wherein at least one directing element (13) is provided, which is arranged at least in sections in the furnace shaft (4), wherein the directing element (13) forms a gap (15) with an inner wall (14) of the furnace shaft (4) at least in the region of the one of the two ends (5, 6) of the furnace shaft (4), wherein the at least one feeding means (10, 11) is adapted for feeding the unexpanded material (1) into the gap (15), **characterised in that** releasable fastening means are provided for the at least one directing element (13) in order to be able to remove the at least one directing element (13) from the furnace shaft (4) and reinsert it as required.

2. Device according to claim 1, **characterised in that** the at least one directing element (13), as viewed in conveying direction (12), extends at most to the end of the first half, preferably at most to the end of the first third, most preferably at most to the end of the first quarter, of the conveying section (7).

3. Device according to any one of claims 1 to 2, **characterised in that** the at least one directing element (13) extends over at least a quarter of the conveying section (7).

4. Device according to any one of claims 1 to 3, **characterised in that** the gap (15), as viewed along the conveying direction (12), extends fully circumferentially at least in sections around a radial centre (16) of the furnace shaft (4).

5. Device according to any one of claims 1 to 4, **characterised in that** the gap (15) has a gap width (17) which varies in the conveying direction (12) by at least 50%, preferably by at least 65%, most preferably by at least 80%, wherein the gap width (17) is preferably at most 10 cm.

6. Device according to any one of claims 1 to 5, **characterised in that** the gap (15) has a gap width (17) which varies in a circumferential direction (18) around a radial center (16) of the furnace shaft (4) by at most 35%, preferably by at most 10%, most preferably by at most 5%, wherein the gap width (17) is preferably at most 10 cm.

7. Device according to any one of claims 1 to 6, **characterised in that** at least along a portion of the conveying section (7) the furnace shaft (4) has transversely, in particular perpendicularly, to the conveying direction (12) a round, at leastsectionally round, preferably a substantially circular or substantially elliptical, cross-section which is bounded by the inner wall (14).

8. Device according to any one of claims 1 to 7, **characterised in that** at least along a portion of the conveying section (7) the furnace shaft (4) has transversely, in particular perpendicularly, to the conveying direction (12) an at least sectionally angular, , preferably a substantially rectangular or substantially square, cross-section which is bounded by the inner wall (14).

9. Device according to any one of claims 1 to 8, **characterised in that** the inner wall (14) is formed by at least one limiting element, which is preferably made of high-temperature steel, and **in that** the at least one directing element (13) is made of the same material as the at least one limiting element.

10. Device according to any one of claims 1 to 9, **characterised in that** the at least one feeding means (11) is adapted to suck the unexpanded material (1) into the furnace shaft (4) together with a quantity of air at the lower end (6) of the furnace shaft (4) in the direction of the upper end (5) of the furnace shaft (4) such that the quantity of air forms an air flow flowing from bottom to top, by means of which the material (1) is conveyed from bottom to top along the conveying section (7) in order to be expanded in the upper half, preferably in the uppermost third, of the conveying section (7).

11. Device according to claim 10, **characterised in that** the at least one feeding means comprises at least one suction nozzle (11) connected upstream of the furnace shaft (4), and preferably a diffuser (30) connected downstream of the suction nozzle (11).

12. Device according to any one of claims 1 to 9, **characterised in that** the at least one feeding means (10) is adapted to feed the unexpanded material (1) at the upper end (5) of the furnace shaft (4) in the direction of the lower end (6) of the furnace shaft (4) into the furnace shaft (4) in such a way that the material (1) is conveyed from top to bottom along the conveying section (7) at least by means of gravity in order to be expanded in the lower half, preferably in the lowest third, of the conveying section (7).

13. Device according to any one of claims 1 to 12, **characterised in that** the at least one directing element (13) is made of metal, in particular of high-temperature steel.

14. Device according to any one of claims 1 to 13, **characterised in that** a free space (19) is arranged between the at least one directing element (13) and a radial center (16) of the furnace shaft (4) at least along the entire extension of the at least one directing element (13) in the furnace shaft (4), preferably along the entire extension of the at least one directing element (13) parallel to the conveying direction (12).

## Revendications

1. Dispositif de préparation d'un granulat expansé (2) à partir d'une matière minérale en forme de grain de sable (1) avec un agent gonflant, par exemple pour la préparation d'un granulat expansé (2) à partir de perlite (1) ou de sable d'obsidienne avec de l'eau liée comme agent gonflant, le dispositif comprenant un four (3) avec un puits de four (4) étant sensiblement vertical, qui présente une extrémité supérieure (5) et une extrémité inférieure (6), dans lequel une section de transport (7) s'étend entre les deux extrémités (5, 6), laquelle traverse plusieurs zones de chauffage (8) disposées séparément les unes des autres dans une direction de transport (12), dans lequel les zones de chauffage (8) présentent respectivement au moins un élément de chauffage (9) pouvant être commandé indépendamment les uns des autres, pour chauffer la matière (1) au moins à une température critique et pour gonfler les grains de sable (1), dans lequel au moins un moyen d'alimentation (10, 11) est prévu en outre, qui est configuré pour introduire au moins la matière (1) non expansée au niveau d'une des deux extrémités (6, 5) du puits de four (4) dans la direction de l'autre des deux extrémités (5, 6) du puits de four (4) dans le puits de four (4), pour gonfler la matière (1) vu dans la direction de transport (12) dans la dernière moitié, de préférence dans le dernier tiers, de la section de transport (7), dans lequel au moins un élément conducteur (13) est prévu, qui est disposé au moins par sections dans le puits de four (4), dans lequel l'élément conducteur (13) forme une fente (15) au moins dans la zone de l'une des deux extrémités (5, 6) du puits de four (4) avec une paroi intérieure (14) du puits de four (4), dans lequel l'au moins un moyen d'alimentation (10, 11) est configuré pour introduire la matière (1) non expansée dans la fente (15), **caractérisé en ce que** pour l'au moins un élément conducteur (13), des moyens de fixation amovibles sont prévus pour pouvoir retirer l'au moins un élément conducteur (13) du puits de four (4) et pour le réinsérer au besoin.

2. Dispositif selon la revendication 1, **caractérisé en ce que** l'au moins un élément conducteur (13) vu dans la direction de transport (12) s'étend au maximum jusqu'à la fin de la première moitié, de préférence au maximum jusqu'à la fin du premier tiers, le plus préférentiellement au maximum jusqu'à la fin du premier quart, de la section de transport (7).

3. Dispositif selon l'une quelconque des revendications 1 à 2, **caractérisé en ce que** l'au moins un élément conducteur (13) s'étend sur au moins un quart de la section de transport (7).

4. Dispositif selon l'une quelconque des revendications 1 à 3, **caractérisé en ce que** la fente (15) s'étend entièrement vu le long de la direction de transport (12) au moins par sections autour d'un centre radial (16) du puits de four (4).

5. Dispositif selon l'une quelconque des revendications 1 à 4, **caractérisé en ce que** la fente (15) présente une largeur de fente (17), qui varie dans la direction de transport (12) d'au moins 50 %, de préférence d'au moins 65 %, le plus préférentiellement d'au moins 80 %, dans lequel la largeur de fente (17) est de préférence de maximum 10 cm.

6. Dispositif selon l'une quelconque des revendications 1 à 5, **caractérisé en ce que** la fente (15) présente une largeur de fente (17), qui varie dans une direction circonférentielle (18) autour d'un centre radial (16) du puits de four (4) de maximum 35 %, de préférence de maximum 10 %, le plus préférentiellement de maximum 5 %, dans lequel la largeur de fente (17) est de préférence de maximum 10 cm.

7. Dispositif selon l'une quelconque des revendications 1 à 6, **caractérisé en ce qu'**au moins le long d'une section de la section de transport (7), le puits de four (4) présente transversalement, en particulier perpendiculairement à la direction de transport (12) une section transversale ronde au moins par sections, de préférence une section transversale sensiblement circulaire ou sensiblement elliptique, qui est délimitée par la paroi intérieure (14).

8. Dispositif selon l'une quelconque des revendications 1 à 7, **caractérisé en ce qu'**au moins le long d'une section de la section de transport (7), le puits de four (4) présente transversalement, en particulier perpendiculairement, à la direction de transport (12) une section transversale angulaire au moins par sections, de préférence une section transversale sensiblement rectangulaire ou sensiblement carrée, qui est délimitée par la paroi intérieure (14).

9. Dispositif selon l'une quelconque des revendications 1 à 8, **caractérisé en ce que** la paroi intérieure (14) est formée par au moins un élément de délimitation, lequel est fabriqué de préférence à partir d'acier résistant aux températures élevées, et **en ce que** l'au moins un élément conducteur (13) est fabriqué à partir de la même matière que l'au moins un élément de délimitation.

10. Dispositif selon l'une quelconque des revendications 1 à 9, **caractérisé en ce que** l'au moins un moyen d'alimentation (11) est configuré pour aspirer la matière (1) non expansée ensemble avec une quantité d'air au niveau de l'extrémité inférieure (6) du puits de four (4) dans la direction de l'extrémité supérieure (5) du puits de four (4) dans le puits de four (4) de sorte que la quantité d'air forme un flux d'air s'écoulant de bas en haut, au moyen duquel la matière (1) est transportée de bas en haut le long de la section de transport (7) pour être expansée dans la moitié supérieure, de préférence dans le tiers supérieur, de la section de transport (7).

11. Dispositif selon la revendication 10, **caractérisé en ce que** l'au moins un moyen d'alimentation comprend au moins une buse d'aspiration (11) montée en amont du puits de four (4), ainsi que de préférence un diffuseur (30) monté en aval de la buse d'aspiration (11).

12. Dispositif selon l'une quelconque des revendications 1 à 9, **caractérisé en ce que** l'au moins un moyen d'alimentation (10) est configuré pour introduire la matière (1) non expansée au niveau de l'extrémité supérieure (5) du puits de four (4) dans la direction de l'extrémité inférieure (6) du puits de four (4) dans le puits de four (4) de sorte que la matière (1) est transportée au moins au moyen de la gravité de haut en bas le long de la section de transport (7), pour être expansée dans la moitié inférieure, de préférence dans le tiers inférieur, de la section de transport (7).

13. Dispositif selon l'une quelconque des revendications 1 à 12, **caractérisé en ce que** l'au moins un élément conducteur (13) est fabriqué à partir de métal, en particulier à partir d'acier résistant aux températures élevées.

14. Dispositif selon l'une quelconque des revendications 1 à 13, **caractérisé en ce qu'**un espace libre (19) est disposé entre l'au moins un élément conducteur (13) et un centre radial (16) du puits de four (4) au moins le long de toute l'étendue de l'au moins un élément conducteur (13) dans le puits de four (4), de préférence le long de toute l'étendue de l'au moins un élément conducteur (13) parallèlement à la direction de transport (12).
